# EUROPÄISCHE PATENTSCHRIFT

(11) **EP 0 989 451 B1**
(45) Veröffentlichungstag und Bekanntmachung des Hinweises auf die Patenterteilung: **27.03.2002**
(21) Anmeldenummer: 98117440.2
(22) Anmeldetag: 15.09.1998
(51) Int. Cl.: G03B 27/58, G03D 13/00

(54) **Vorrichtung zur Herstellung fotografischer Abzüge**
Apparatus for producing photographic prints
Dispositif pour la production d'épreuves photographiques

(43) Veröffentlichungstag der Anmeldung: 29.03.2000
(73) Patentinhaber: GRETAG IMAGING AG, 8105 Regensdorf (CH)
(72) Erfinder: Ackermann, Rudolf, 8967 Widen (CH); Dünner, Albert, 8046 Zürich (CH); Fendt, Edmund, 5425 Schneisingen (CH); Lussky, Helmut, 8428 Teufen (CH)
(74) Vertreter: Schwabe - Sandmair - Marx

(56) Entgegenhaltungen:
- EP-A- 0 684 505
- US-A- 4 127 225
- US-A- 4 136 946
- US-A- 4 782 354
- US-A- 5 237 359

## Beschreibung

Die Erfindung betrifft eine Vorrichtung zur Herstellung von fotografischen Abzügen gemäß dem Oberbegriff des Patentanspruchs 1. Eine derartige Vorrichtung umfaßt eine Vorrichtung zur Durchleuchtung bzw. Abtastung von Bildvorlagen, die in der Form eines bandartigen Endlosmaterials verarbeitet werden. Des weiteren sind eine erste Einrichtung zur Erzeugung der Abzüge und eine zweite Einrichtung zur Erzeugung von Daten- bzw. Bilddatenfeldern auf dem bandartigen Endlosmaterial mit den Abzügen vorgesehen. Ein Materialspeicher ist zwischen der ersten und der zweiten Einrichtung angeordnet.

Eine Vorrichtung der gattungsgemäßen Art ist beispielsweise der EP 0 684 505 A1 zu entnehmen. Bei einer derartigen Vorrichtung nach dem Stand der Technik ergeben sich Differenzen der Geschwindigkeit des Bandlaufes des Endlosmaterials, deren Ursache weiter unten beschrieben wird. Dies führt dazu, daß beispielsweise bei der ersten Einrichtung zur Erzeugung der Abzüge, einer herkömmlichen optischen Belichtungsstation, eine höhere Betriebsgeschwindigkeit möglich ist, als bei einer zweiten vorhandenen Einrichtung zur Erzeugung von Bilddatenfeldern, hier einer CRT-Belichtungsstation. Andererseits wird die CRT-Belichtungsstation nur relativ selten verwendet, während die herkömmliche optische Belichtungsstation für jeden einzelnen Abzug eingesetzt wird. In dem konkreten Beispiel wird die CRT-Belichtungsstation am Ende bzw. am Anfang jedes Auftrages über eine bestimmte Anzahl von Bildern, die auf einem fotografischen Film möglich sind, beispielsweise 24, 36 oder dergleichen, zur Herstellung eines Index-Prints verwendet. Ein solcher Index-Print zeigt sämtliche Bilder eines Auftrages in einem verkleinerten Format, so daß es möglich ist, sämtliche Bilder eines Auftrages in einem kleinen Format auf einem Abzugsformat abzubilden bzw. anzusehen. Bei einer derartigen Vorrichtung nach dem Stand der Technik sind folglich die verschiedenen Geschwindigkeiten der verschiedenen Belichtungsstationen bzw. der ersten und der zweiten Einrichtung zur Erzeugung von Abzügen bzw. Bild- oder Bilddatenfeldern zu berücksichtigen, wobei dieser Stand der Technik vorschlägt, eine längenkontrollierte Vorschubsteuerung durchzuführen, wobei die belichteten Abzüge in einem Materialspeicher zwischen der ersten Einrichtung, d.h. hier der herkömmlichen optischen Belichtungsstation, und der zweiten Einrichtung, d.h. hier der CRT-Belichtungsstation, gepuffert werden. Es wird hier also anhand der Länge in Maßeinheiten oder an anderen Längenmaßeinheiten, beispielsweise der vorgegebenen Länge eines Abzugs, eine Steuerung des Vorschubes des Materialbandes durchgeführt.

Aus der US 4 136 946 A ist eine Vorrichtung zur Herstellung photographischer Abzüge auf Bandmaterial mit einem Zwischenspeicher zum Ausgkeich unterschiedlicher Arbeitsgeschwindigkeiten der verschiedenen Bearbeitungsstationen bekannt. Darin ist der Materialspeicher in Form eines Raums, in den das Materialband in Form von losen Schlaufen zufällig, d.h. nicht über Rollen geführt, abgelegt wird, ausgebildet. Weitherhin sind Bandmaterialspeicher mit lose abgelegten Materialschlaufen auch aus der US 5 237 359 A bekannt.

Es ist die Aufgabe der vorliegenden Erfindung, eine gattungsgemäße Vorrichtung insbesondere insofern weiterzubilden, als sich diese kostengünstiger und zuverlässiger einsetzen läßt.

Insbesondere ist es in Verbindung damit eine Aufgabe der vorliegenden Erfindung, einen Pufferspeicher bzw. Materialspeicher für eine gattungsgemäße Vorrichtung zu schaffen, der unterschiedlichen Zufuhr- bzw. Auszugsgeschwindigkeiten gewachsen ist.

Gemäß der Erfindung wird die obige Aufgabe durch die Merkmale des Anspruchs 1 gelöst Vorteilhafte Weiterbildungen sind Gegenstand der Ansprüche 2 bis 10.

Durch die Verwendung eines derartigen Materialspeichers, der auch Chaosspeicher genannt werden könnte, ist es möglich, daß Materialband mit den Abzügen schonend in den Speicher einzuführen, platzsparend zu lagern und bei Bedarf gleichfalls schonend wieder aus dem Speicher zu entnehmen.

Herkömmliche Speicher (konventionelle Rollenspeicher, bekannt, zB. aus der U.S 4 782 354 A) nehmen über Rollen eine Materialspeicherung vor, indem das Abzug-Materialband über die Rollen eine größere oder kleinere Strecke, je nach überschüssigem Anfall von Abzug-Materialband, (ähnlich wie bei einem Flaschenzug) umgeleitet wird. Bei der Verwendung von Rollen kann durch die Oberfläche der Rollen das Materialband nicht nur beschädigt werden, sondern es tritt auch eine große mechanische Kraft auf, die an dem Band zieht und sogar zum Reißen eines Materialbandes führen kann. Ferner ist der herkömmliche Speicher mit seinen diversen Rollen und dem Rollenlift auch sehr aufwendig in Bezug auf die Kosten und den Platz.

Vorteilhafterweise ist am Ausgang des Materialspeichers eine Abweisungseinrichtung angeordnet, die dafür sorgt, daß in den Materialspeicher ruckartig bzw. mit hoher Beschleunigung eingefülltes Materialband nicht unerwünschterweise in einem Abzugspalt zwischen Auftragsrollen gerät, die eigentlich nur das Ende des in dem Materialspeichers befindlichen Materialbandes fassen sollen. Es hat sich nämlich gezeigt, daß bei entsprechenden Speichern eine Ablagestruktur des Materialbandes auftritt, die regelmäßig dazu führen würde, daß eine Schleife des Materialbandes in den Spalt zwischen den Austragsrollen geraten kann, so daß das Materialband nicht nur geknickt, sondern auch vollkommen zerstört werden kann. Eine adequate längenkontrollierte Vorschubsteuerung ist bei einem derartigen Unfall natürlich ebenfalls nicht mehr möglich. Aus diesem Grund wird eine Abweisungseinrichtung, beispielsweise in der Form einer Hochspannungselektrode, eines Ventilators oder dergleichen vorgesehen, die dafür sorgt, daß eine nicht für den Austrag vorgesehene Materialbandschleife von dem Spalt zwischen den Austragsrollen ferngehalten wird.

Wenn der Zugang und der Ausgang des Materialspeichers in unterschiedlichen Höhen angeordnet sind, kann die Häufigkeit des Ereignisses verringert werden, bei dem eine nicht für den Abtransport bestimmte Materialschleife in den Spalt zwischen die Austragsrollen gerät. Dabei sollte vorteilhafterweise der Ausgang höher als der Zugang angeordnet werden. Trotzdem ist auch bei einer solchen Konfiguration eine Abweisungseinrichtung sehr vorteilhaft, da auch die dann seltener auftretenden besagten nachteiligen Ereignisse immer noch einen regulären Betrieb einer gattungsgemäßen Vorrichtung, massiv behindern.

Des weiteren hat es sich als vorteilhaft erwiesen, wenn wenigstens eine der Seitenwände des Materialspeichers mit Öffnungen versehen ist, die senkrecht zu der Untererstreckungsebene des Abzug-Materialbandes verlaufen. Es hat sich gezeigt, daß beim Zuführen des Materialbandes, wenn sich dieses zufällig in Form von Schleifen in den Materialspeicher legt, ganz erhebliche Luftmengen zwischen den Schleifen des Materialbandes zu verdrängen sind. Umgekehrt muß diese Luftmenge wieder zugeführt werden, wenn das Materialband wieder abgezogen wird. Dies kann über die Öffnungen in den Wänden bzw. Seitenwänden des Materialspeichers geschehen. Ansonsten müßte die Luft immer über einen schmalen Spalt zwischen den geschlossenen Wänden des Materialspeichers und dem Abzug-Materialband zu- bzw. abgeführt werden. Die dabei auftretenden Druck- und Sogsituationen würden das Materialband auch stärker belasten und zu unkontrollierten Bewegungen führen, die dazu führen könnten, daß das Materialband die Innenwände des Materialspeichers unbeabsichtigter Weise berühren, so daß das Materialband verkratzt bzw. beschädigt werden könnte.

Um sicherstellen zu können, daß aus dem Materialspeicher nur dann mit hoher Geschwindigkeit ein Materialbandabschnitt abgezogen wird, der in der nachfolgenden zweiten Einrichtung zur Erzeugung von Daten- bzw. Bilddatenfeldern auf dem bandartigen Endlosmaterialband bearbeitet bzw. belichtet werden soll, wenn eine entsprechende Menge an gespeichertem Materialband in dem Speicher vorhanden ist, ist am Zugang und/oder Ausgang des Materialspeichers eine Überwachungseinrichtung vorgesehen, die die aktuelle Menge an gespeicherten Abzug-Materialband überwacht. Würde nämlich beispielsweise aufgrund hoher Belichtungszeiten von mehreren Abzügen eine große Verzögerung in der ersten Einrichtung zur Erzeugung der Abzüge auftreten, so könnte unter Umständen bei dem nächsten Arbeitsgang der zweiten Einrichtung zur Erzeugung von Daten- bzw. Bilddatenfeldern im Materialspeicher noch nicht genügend Materialband vorhanden sein, um einen ausreichenden Vorschub gewährleisten zu können. In diesem Fall würde ohne eine Überwachungseinrichtung beim Austragen des Materialbandes aus dem Materialspeicher das Materialband eventuell zerrissen werden oder aber beschädigt werden. Eine Längensteuerung zur korrekten Plazierung eines für beispielsweise einen Index-Print oder eine sonstige informative Belichtung vorgesehenen Rahmenbereiches des Materialbandes wäre in einem solchen Fall nicht möglich. Dementsprechend wäre auch ein längenkontrollierter Transport schwerlich möglich, wenn aufgrund von Druck- und Sogwirkungen im Materialspeicher der Schlupf zwischen dem Materialband und den Transporteinrichtungen aufgrund der Zufälligkeit der Ablage im Materialspeicher nicht mehr vorausberechenbar wäre.

Eine entsprechende Überwachung der im Materialspeicher vorhandenen Abzug-Materialbandmenge läßt sich durchführen, wenn beispielsweise im Bereich der ersten Einrichtung eine Markierungseinrichtung vorgesehen ist, die eine Markierung an bzw. auf dem Abzug-Materialband vorsieht, wobei die Markierung anzeigt, wo bzw. wann die zweite Einrichtung zu aktivieren ist. Die Überwachungseinrichtung kann in diesem Fall immer feststellen, ob ein, zwei oder drei oder gar mehr Einsatzbereiche auf dem Materialband für die zweite Einrichtung, beispielsweise eine CRT-Belichtungseinrichtung in dem Materialspeicher vorhanden sind. Entsprechend kann beispielsweise am Auszug des Materialspeichers oder an der zweiten Einrichtung ebenfalls eine Überwachungseinrichtung vorgesehen sein, die die Anzahl der am Eingang des Materialspeichers gezählten Ereignisse wieder abzieht, so daß immer feststeht, wieviele von der zweiten Einrichtung zu bearbeitende Materialrandbereiche im Materialspeicher, auch Chaosspeicher genannt, zugegen sind. Bei einer derartigen Steuerung kommt es auf irgendwelche Längen, einen Schlupf oder dergleichen nicht mehr an, sondern lediglich darauf, daß Ereignisse detektiert werden und unmittelbar zu Reaktionen führen, beispielsweise daß die zweite Einrichtung aktiviert wird, daß das Materialband in der zweiten Einrichtung abgebremst wird, daß die Austrageinrichtung zum Austragen des Materialbandes aus dem Materialspeicher nicht aktiviert wird, wenn nicht wenigstens beispielsweise ein oder zwei Ereignisse von der Überwachungseinrichtung am Zugang des Materialspeichers erfaßt worden sind, oder dergleichen mehr.

Nachteilig am Pufferspeicher nach dem Stand der Technik (konventioneller Rollenspeicher) war weiter, daß der Pufferspeicher nur drei Zustände einnehmen konnte, nämlich "leer", "aufnahmefähig" oder "voll". "Leer" bedeutete, daß das Materialband geradlinig zwischen Zufuhr und Abfuhr gespannt ist. "Voll" bedeutete, daß der Abstand zwischen den oberen und unteren Rollen, zwischen denen sich das Band windet, maximal ist und eine weitere Absenkung der unteren Rollen nicht mehr möglich ist. Eine weitere Bandzufuhr würde dann zum Verlust der Bandführung und somit zu einem Bandstau führen. Aufgrund der geringen, herkömmlichen Speichergröße (ca. 3 m bis 4 m) konnte über Sensorik nur eine geringe Vorwarnzeit für die Steuerung der Transportgeschwindigkeit gegeben werden, da ansonsten ein Großteil des Speichers für die Vorwarnung verbraucht worden wäre. Deshalb erfolgte der Übergang zwischen "aufnahmefähig" und "leer" sowie "aufnahmefähig" und "voll" abrupt. War der Speicher voll, war ein sofortiger Transportstopp des Materialbandes erforderlich. Entsprechendes galt, wenn der Speicher leer war. Vorteilhaft gibt es bei der erfindungsgemäßen Ausgestaltung einen kontinuierlichen Übergang zwischen leer und voll, wobei der Pufferspeicher auch im vollen Zustand grundsätzlich noch aufnahmefähig ist, jedoch die Lagerung im Pufferspeicher bei einer weiteren Füllung die Qualität des Materialbandes zunehmend beeinträchtigen könnte. Auch im leeren Zustand ist der Speicher grundsätzlich noch abgabefähig, so daß ein maßvolles Abbremsen der Geschwindigkeit auf der Abgabeseite des Materialspeichers erfolgen kann. Aufgrund dieser grundsätzlich anderen Eigenschaften des erfindungsgemäßen Pufferspeichers kann bei der erfindungsgemäßen Vorrichtung zur Herstellung von fotografischen Abzügen die Geschwindigkeit des Materialbandes kontinuierlich geregelt werden und auf ein abruptes Stoppen der Geschwindigkeit kann zumindest überwiegend verzichtet werden. Erfindungsgemäß wird die Steuerung insbesondere auf eine "Soll-Länge" des Materialbandes im Pufferspeicher ausgerichtet, die den Arbeitspunkt der Steuerung darstellt. Dieser Arbeitspunkt kann z. B. im Bereich von 4 m bis 7 m liegen. Dabei ist der Pufferspeicher aber z. B. so ausgelegt, daß er bequem z. B. 8 m bis 15 m aufnehmen kann und seine Obergrenze z. B. erst bei 25 m erreicht wird. Aufgrund dieser besonderen Eigenschaft des Pufferspeichers kann das verwendete Steuerprogramm zur Steuerung der Transportgeschwindigkeit des Materialbandes insbesondere auf den Prinzipien der Fuzzy-Logik beruhen, die eine stetige Änderung der Transportgeschwindigkeit bewirkt. Dabei kann durch die Ausgestaltung und/oder die Steuerung die Längenobergrenze für das Materialband z. B. im Bereich oberhalb 15 m und z. B. unterhalb 50 m festgelegt werden. Die Verwendung einer Längenobergrenze ist dahingehend vorteilhaft, daß das Materialband nicht durch sein Eigengewicht gedrückt werden kann und auf aufwendige Stützmechanismen zur Stützung des Materialbandes somit verzichtet werden kann.

Die im Materialspeicher befindliche Bandlänge wird durch Sensorik überwacht. Dabei wird die zugeführte und abgeführte Länge durch Zählen von detektierten Markierungen gemessen. Aus der Differenz der zugeführten und abgeführten Länge kann die aktuell im Speicher vorhandene Länge bestimmt werden ("Buchhalterprinzip").

Im Gegensatz zum konventionellen Rollenspeicher ist vorzugsweise der erfindungsgemäße Materialspeicher mit einer seitlichen Führung versehen. Vorzugsweise ist ein Spiel zwischen dem Materialband und der Führung vorhanden. Dieses Spiel liegt innerhalb des Materialspeichers vorzugsweise im Prozentbereich der Breite des Materialbandes (z. B. 1% bis 10%, bei einer Bandbreite von z. B. 89 mm bis 127 mm, also z. B. 5 mm). In der Nähe des Auszugrollenpaares ist vorzugsweise ebenfalls eine Führung vorgesehen. Deren Spiel wird vorzugsweise deutlich knapper gestaltet. Vorzugsweise liegt das Spiel unterhalb von 1% der Materialbandbreite (z. B. 0,1% oder z. B. 0,1 mm). Vorteilhaft ist die Führung des Materialspeichers als die bereits erwähnte Seitenwand, die insbesondere Öffnungen aufweisen kann, ausgebildet. Durch die erfindungsgemäße Führung im Materialspeicher ist im Gegensatz zum Stand der Technik bei den erfindungsgemäß zufälligen bzw. chaotischen oder unregelmäßigen Verwindungen des Materialbandes im Materialspeicher eine Führung des Materialbandes gegeben. Vorteilhaft ist die Breite der Führung verstellbar, um sie an wechselnde Breiten unterschiedlicher Materialbänder anpassen zu können.

Erfindungsgemäß kann der hierin beschriebene Materialspeicher, insbesondere gemäß Merkmal d) des Anspruches 1, und insbesondere mit den Merkmalen der Ansprüche 2 bis 5 und 10 nicht nur für die Vorrichtung zur Herstellung fotografischer Abzüge mit den Merkmalen des Anspruches 1, sondern auch allgemein als Pufferspeicher für bandförmiges Fotomaterial eingesetzt werden. Die Erfindung betrifft somit insbesondere einen Materialspeicher als Puffer für bandförmiges Fotomaterial, wobei der Puffer im Rahmen einer Fotomaterialtransportvorrichtung eingesetzt wird, um insbesondere bei Transportgeschwindigkeitsschwankungen Fotomaterialband zu puffern.

Nachfolgend wird die vorliegende Erfindung anhand einer bevorzugten Ausführungsform näher erläutert. Dabei werden unter Bezugnahme auf die beigefügten Darstellungen weitere Merkmale, Vorteile und Zielsetzungen gemäß der vorliegenden Erfindung offenbart, in denen
- Figur 1: eine schematische Teilansicht einer bevorzugten Ausführungsform mit Merkmalen gemäß der Erfindung ist;
- Figur 2: eine ergänzende Teilansicht zu Figur 1 ist, die eine bevorzugte Aus-führungsform gemäß der Erfindung in schematischer Form vollendet; und
- Figur 3: schematisch einen Materialbandabschnitt einer Materialbahn mit Abzügen darstellt.

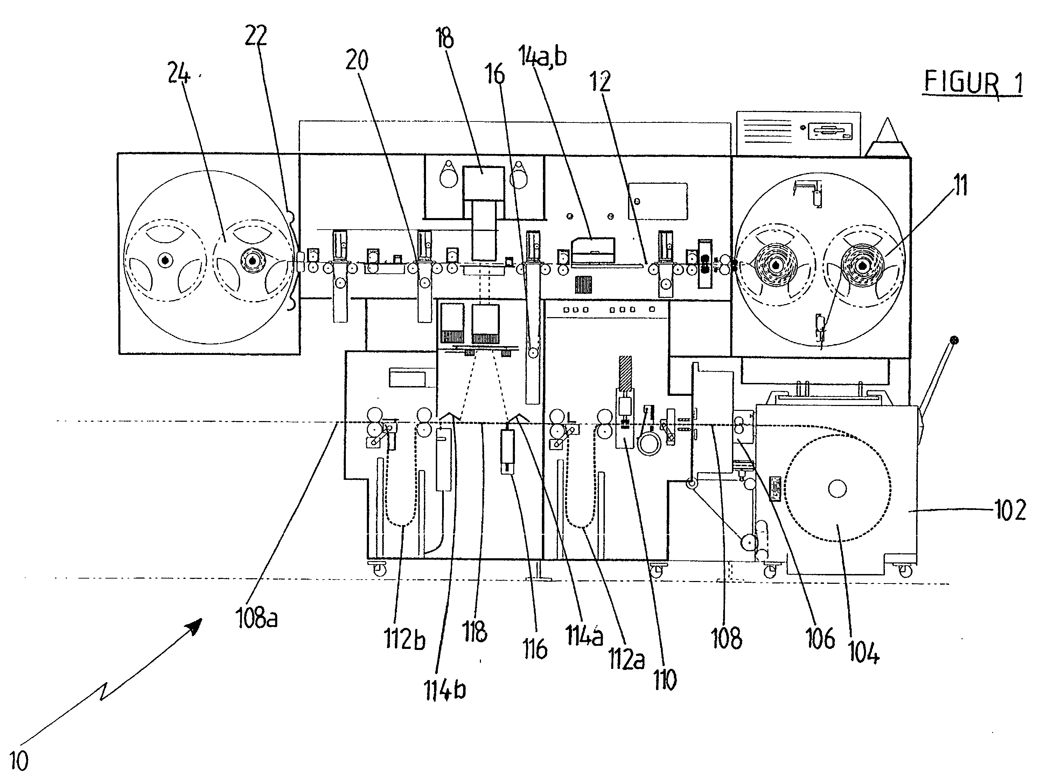

In Figur 1 ist eine Vorrichtung zur Herstellung von fotografischen Abzügen auf einem bandartigen Endlosmaterial, nachfolgend kurz "Printer" genannt, mit dem Bezugszeichen 10 benannt worden.

Der Printer 10 umfaßt einen Abschnitt zur Zuführung von negativen oder positiven in Form eines Endlosbandes. Diese Einrichtung 11 weist ein Karussell mit zwei Bandspulen mit Bändern 12 auf, die in die Vorrichtung 10 eingeleitet werden. Eine Abtasteinrichtung 14a, b, die einen Farbscanner (14b, rechts) mit geringer Auflösung und einen Schwarz-Weiß-Scanner (14a, links) mit hoher Auflösung umfaßt, tasten das Band mit Bildinformationen ab. Der Schwarz-Weiß-Scanner erfaßt, ob die Bilder auf dem Band 12 hinreichend scharf sind, so daß die Erstellung eines fotografischen Abzuges sinnvoll ist, oder nicht und der Farbscanner ermittelt Farbdichtewerte, um eine optimierten Aussteuerung der Intensitäten der einzelnen Farben zu ermöglichen, mit denen später ein Negativ oder dergleichen belichtet werden soll, um einen optimierten Abzug zu ermöglichen.

Die Bilddaten von dem Scanner-Duo 14a, 14b werden auch in einem Computer bzw. Rechner zu colorierten hochauflösenden Bilddaten zusammengestellt, mit denen sich jeweils zu einem Auftrag ein Index-Print erstellen läßt.

In einem Materialbahnspeicher 16 kann ein Materialbahnabschnitt von belichteten Negativ- oder Positivmaterial aufgenommen werden, der einem maximalen Auftragsvolumen, also beispielsweise 36 Negativen, entspricht. Auf diese Weise kann vor der Belichtung des ersten Negativs eines Auftrages bereits eine Aussage über sämtliche Bilder oder einen Teil der Bilder eines Auftrages gemacht werden, beispielsweise über eine generelle Stimmung der Bilder, etwa eine Abendstimmung, eine Dämmerungsstimmung, eventuell eine Reihe von Portraitbildern oder dergleichen mehr. Diese Daten können auch bei der Erstellung von Belichtungsdaten eingesetzt werden.

Die Negative bzw. Positive des Bandes 12 werden dann einer Belichtungsstation 18 zugeführt, die in dem hier wiedergegebenen Beispiel eine herkömmliche optische Belichtungsstation ist. Natürlich kann hier auch eine CRT-Belichtungsstation, eine mit Lasern bearbeitende Belichtungsstation vorgesehen sein. Die hier explizit vorgesehene optische Belichtungsstation stellt eine Belichtung aufgrund der von dem Scanner-Duo 14a, 14b erfaßten und von einem Computer errechneten Belichtungsdaten bestimmte Lichtmengen bzw. Farblichtmengen, eventuell über eine subtraktive Filtereinrichtung oder dergleichen ein. Die Belichtungsstation 18 verfügt auch über Vergrößerungsobjektive (ohne Bezugszeichen), die im Strahlengang unterhalb der Belichtungseinrichtung 18 vorgesehen sind.

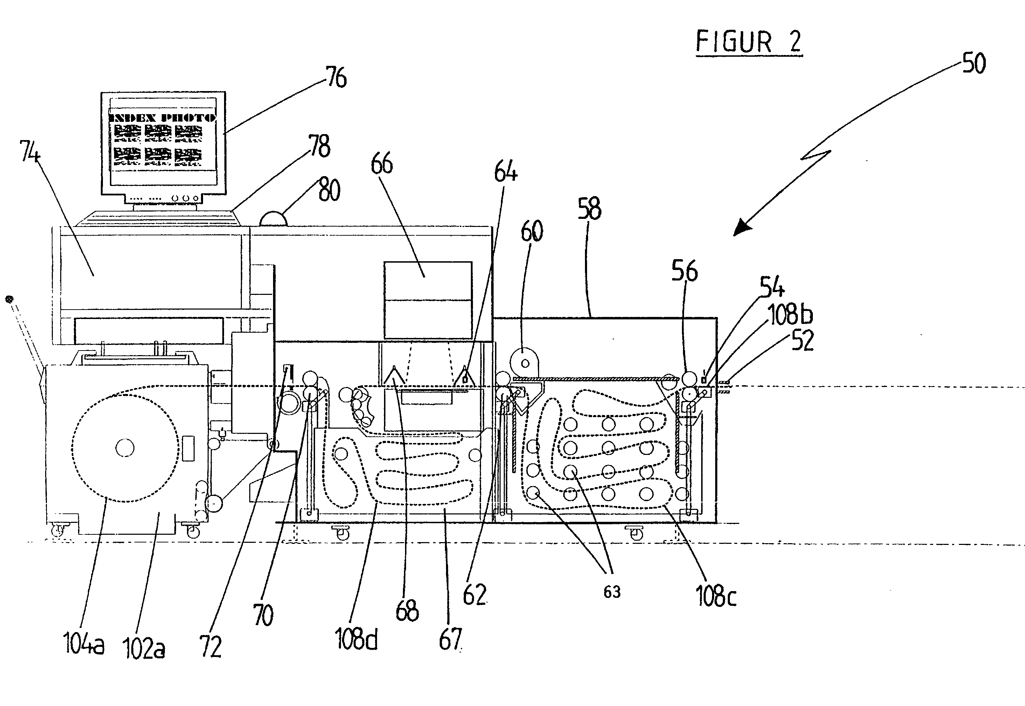

Im Laufe des Transportweges des Bandes 12 sind verschiedene Pufferspeicher 20 angeordnet, um eine bessere zeitliche bzw. streckenmäßige Abstimmung des Materialtransportes und der einzelnen Aktivitäten zu ermöglichen. Am Ende des Durchlaufs des Materialbandes 12 ist wiederum eine Spuleinrichtung 24 vorgesehen, um das bearbeitete Material des Bandes 12 wieder auf Speicherspulen aufzuwickeln. Um einen automatischen Betrieb zu gewährleisten, ist eine Einfädelungseinrichtung 22 vorgesehen, die das ankommende Ende des Bandes 12 (also den Anfang des Bandes) auf eine Spule aufwickeln hilft, bis das Material einen ausreichenden Halt hat, so daß das Band 12 selbsttätig weiter auf eine Spule aufgewickelt werden kann. Auch in der Einrichtung 24 ist ein Karussell vorgesehen, um jeweils nach der Entnahme einer vollen Spule eine neue Leere vorsehen zu können, um einen kontinuierlichen Betrieb der Einrichtung gemäß Figur 1 bzw. den Figuren 1 und 2 gewährleisten zu können.

Von einem Magazinwagen 102 (auch "Kassette" genannt) aus wird ein lichtempfindliches Band 108 von einer Materialbandrolle 104 abgespult. Dieses Materialband 108 wird über eine Einlaufstation 106 aus dem Magazinwagen 102 herausgeführt und einem späteren Belichtungsprozeß zugeleitet.

In der Laufbahn des Bandes 108 ist unter anderem eine Splicer-Einrichtung vorgesehen, die das Ende einer vorherigen Materialbahn 108 an den Anfang einer nachfolgenden Materialbahn mit Wärme und Anpreßdruck ansetzt.

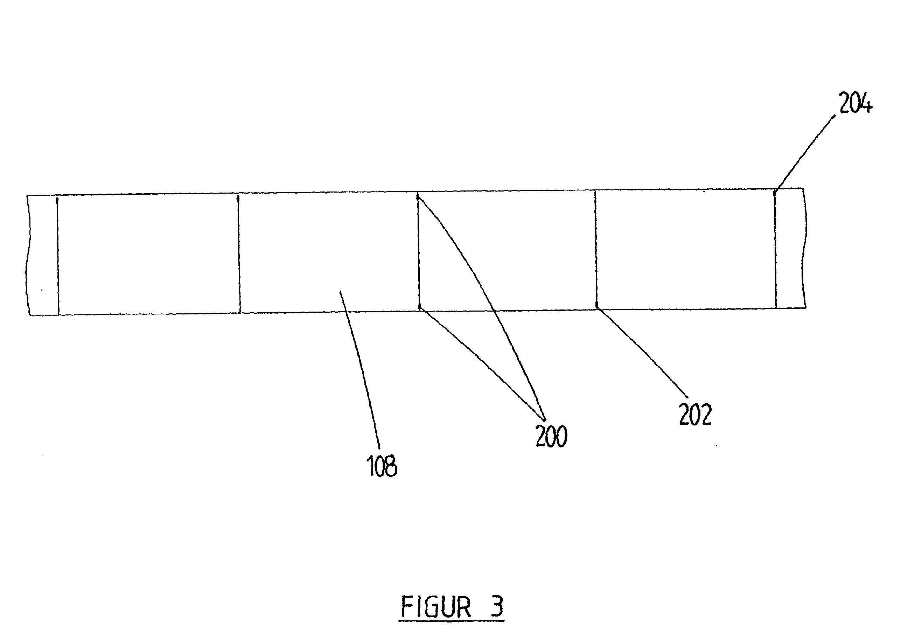

In der Laufbahn des Bandes 108 sind wiederum Schlaufen 112a, 112b vorgesehen, um eine zeitliche Abstimmung der Aktionen innerhalb der ersten Einrichtung zur Erzeugung der Abzüge durchführen zu können. In dem Bereich der Belichtung 118 des Materialbandes 108 sind Lichtfallen 114a, 114b (auch "Papiermasken" genannt) vorgesehen, die das Licht eines Belichtungsvorganges von voraneilenden bzw. nacheilenden Flächen des fotoempfindlichen Materialbandes 108 fernhalten sollen. Am Anfang des Belichtungsbereiches ist eine Markierungseinrichtung 116 vorgesehen, die das Ende eines Auftrages bzw. den Bereich markiert, der von einem Abzug freigehalten wird, um in der zweiten Einrichtung zur Erzeugung von Daten- bzw. Bilddatenfeldern (siehe Figur 2 belichtet zu werden). Die Markierungseinrichtung 116 kann beispielsweise einen Farbfleck auf die Rückseite des Materialbandes aufspritzen. Es können auch Stanzungen oder dergleichen vorgenommen werden. Vorteilhafte Muster für Markierungen in Form von Farbflecken, Stanzungen und dergleichen sind der Figur 3 zu entnehmen.

Das belichtete Material, bei dem pro Auftrag ein Bereich freigelassen worden ist, um in der nachfolgenden zweiten Einrichtung zur Erzeugung von Daten- bzw. Bilddatenfeldern belichtet zu werden, läuft bei einem herkömmlichen Printer 10 in einen Magazinwagen ein, wird jedoch hier in Form der überwiegend belichteten Materialbahn 108a in eine Anordnung 50 gemäß Figur 2 eingeleitet.

Über einen lichtdichten Einlaß 52 wird das Materialband 108b an einer Überwachungseinrichtung 54, beispielsweise in der Form einer Lichtschranke, die im infraroten Bereich arbeitet, vorbeigeleitet, um Markierungen zu erkennen, die durch die Markierungseinrichtung 116 auf dem Band 108b aufgebracht oder in dieses eingebracht worden sind. Die Materialbahn 108b wird über ein Förderrollenpaar 56 in den Materialspeicher 58 hineinbefördert.

In dem Materialspeicher 58 wird die Materialbahn 108c rein zufällig abgelegt. Der dargestellte Verlauf der Materialbahn 108c ist allein beispielhaft und kann auch vollkommen anders aussehen.

In den Seitenwänden des Materialspeichers 58 sind Löcher bzw. Öffnungen 63 vorgesehen, über die ein Einlaufen bzw. Austragen des Materialbandes 108c eine Ent- bzw. Belüftung zwischen den Materialbahnen und/oder den Materialbahnen und den Wandungen des Materialspeichers 58 vorgenommen werden kann.

Am Auszug 62 mit dem gleichermaßen mit 62 bezifferten Austragswalzenpaar 62 ist eine Abweichungseinrichtung 60 hier in der Form eines Ventilators vorgesehen. Der Ventilator 60 erzeugt ein Luftkissen vor dem Ausgang 62, so daß nur das Ende der Materialbahneinheit 108c in den Spalt zwischen dem Austragungswalzenpaar 62 einlaufen kann. Nachfolgende Schlaufen der Materialbahn 108c werden durch das Luftkissen ferngehalten.

Der Ausgang 62 ist zumindest in etwa in gleicher Höhe angeordnet wie der Zugang 56 zu dem Materialspeicher, kann aber auch in einer unterschiedlichen Höhe angeordnet sein.

Insbesondere kann auch der Zugang 56 tiefer angeordnet sein als der Ausgang.

Am Ausgang des Materialspeichers bzw. Chaosspeichers 58 schließt die zweite Einrichtung zur Zeugung von Daten- bzw. Bilddatenfelder 66 an, deren Belichtungsbereich ebenfalls mit lichtundurchlässigen Abschnitten 68 versehen ist, um die Bereiche des Abzug-Materialbandes 108c, 108d, die an den Belichtungsbereich der zweiten Einrichtung bzw. der CRT-Einrichtung 66 angrenzen, vor einer ungewollten Belichtung zu schützen. An einem Ende des Belichtungsbereiches der zweiten Einrichtung 76 und insbesondere an in Anlaufrichtung des Materialbandes 108c vorderen Ende des Belichtungsbereiches der Einrichtung 66 kann wiederum eine Überwachungseinrichtung 64 vorgesehen sein, die eine Markierung auf dem Materialband 108c abtastet bzw. detektiert, die an der Markierungseinrichtung 116 aufgebracht wird bzw. in das Band eingebracht worden ist.

Durch die zweite Einrichtung bzw. CRT-Einrichtung 66 kann ein Index-Print, wie auch in den gattungsgemäßen Stand der Technik erläutert wird, aber auch Informationen anderer Art auf dem Materialband aufgebracht werden. Hier ließe sich beispielsweise auf dem Materialband auch ein Informationsfeld aufbringen, mit dem besondere und eventuell kostenpflichtige Dienstleistungen angeboten werden, beispielsweise können in ihrer Lichtdichte korrigierte Abzüge angeboten werden, wobei ein Probeanzug eines ansonsten schlecht belichteten Abzuges mit abgebildet wird, um einem Kunden derartige Dienstleistungen eindrucksvoll anzubieten.

Im weiteren Bandlauf des Materialbandes 108c, 108d, und hier insbesondere unterhalb der zweiten Einrichtung bzw. der CRT-Belichtungseinrichtung 66 kann ein weiterer Speicher für Bandmaterial 108d vorgesehen sein. Dieser Speicher kann ebenfalls ein Chaosspeicher, aber auch ein Rollenspeicher sein. Das hier zwischengespeicherte Material wird anschließend über Austragsrollen 70, eventuell eine Schneideeinrichtung 72, eine Andockstation oder dergleichen bekannte Einrichtungen mehr, in einen Magazinwagen 102a hineinbefördert, auf dem es in Form eines belichteten Materialbandes 104a als Rolle aufgewickelt wird.

Ein Rechner mit Bildspeicher und dergleichen mehr 74 ist ebenfalls vorgesehen, um die von dem Scanner-Duo aufgenommen und zu Index-Print-Bildern verarbeiteten Bilddaten zwischenzuspeichern und um dementsprechend die zweite Einrichtung bzw. Belichtungseinrichtung 66 zu steuern.

Steuerungseingaben können über eine Tastatur 78 oder eventuell menuegesteuert über eine Maus 80 durchgeführt werden. Ein Index-Print-Foto kann über einen Bildschirm 76 betrachtet werden, so daß ein Bediener hier eventuell noch Korrekturen durchführen oder Anmerkungen machen könnte, falls dies erwünscht ist, beispielsweise in einer bereits angedeuteten wertlichen Weise oder dergleichen.

Die Figur 3 läßt einen Abschnitt eines Materialbandes 108 mit Abzügen erkennen, auf dem verschiedene Markierungen 200, 202, 204 aufgebracht oder eventuell eingestanzt sind. Über die Anbringung derartiger Markierungen ist es möglich, den Bandtransporter vor und am Materialspeicher 58 zu steuern und gleichermaßen den Antransport sowie die Belichtung an der Einrichtung 66 exakt zu steuern.

## Patentansprüche

1. Vorrichtung zur Herstellung von fotografischen Abzügen auf einem bandartigen endlosen Material, mit den folgenden Merkmalen:
a) einer Vorrichtung (18) zur Durchleuchtung bzw. Abtastung von Bildvorlagen, die in der Form eines bandartigen Endlosmaterials verarbeitet werden;
b) einer ersten Einrichtung zur Erzeugung der Abzüge (118);
c) einer zweiten Einrichtung (66) zur Erzeugung von Daten- bzw. Bilddatenfeldern auf dem bandartigen Endlosmaterialband (108) mit den Abzügen;
d) einem Materialspeicher (58) zwischen der ersten und der zweiten Einrichtung, wobei der Materialspeicher (58) ein Raum ist, in den das Materialband mit den Abzügen bzw. das Abzug-Materialband (108c) über einen Zugang zufällig abgelegt wird und über einen Ausgang ausgetragen wird;
e) einer Markierungseinrichtung (116), die im Bereich der ersten Einrichtung (118) vorgesehen ist, um eine Markierung (200, 202, 204) an bzw. auf dem Abzug-Materialband vorzusehen; und
f) einer Überwachungseinrichtung (54, 64), um die Markierung (200, 202, 204) zu detektieren,
**dadurch gekennzeichnet, daß** die Überwachungseinrichtung (54, 64) durch Zählen von detektierten Markierungen festlegt, wo bzw. wann die zweite Einrichtung (66) zu aktivieren ist.

2. Vorrichtung nach Anspruch 1, **dadurch gekennzeichnet, daß** am Ausgang (62) des Materialspeichers (58) eine Abweisungseinrichtung (60) angeordnet ist, beispielsweise eine Hochspannungselektrode oder ein Ventilator (60).

3. Vorrichtung nach einem der Ansprüche 1 oder 2, **dadurch gekennzeichnet, daß** der Zugang (56) und der Ausgang (62) in gleicher Höhe angeordnet sind.

4. Vorrichtung nach einem der Ansprüche 1 bis 3, **dadurch gekennzeichnet, daß** der Materialspeicher (58) Öffnungen (63) in den Wänden aufweist, die senkrecht zu der Untererstreckungsebene des Abzug-Materialbandes (108c) verlaufen.

5. Vorrichtung nach einem der Ansprüche 1 bis 4, **dadurch gekennzeichnet, daß** die Überwachungseinrichtung (54, 64) am Zugang (56) und/oder am Ausgang (62) des Materialspeichers (58) angeordnet ist, um die aktuelle Menge an gespeichertem Abzug-Materialband bzw. an durch die zweite Einrichtung (66) zu belichtenden Bereichen des Materialbandes überwachen.

6. Vorrichtung nach einem der Ansprüche 1 bis 5, **dadurch gekennzeichnet, daß** die zweite Einrichtung eine Überwachungseinrichtung (64) aufweist, die eine bzw. die Markierung erfaßt, um die zweite Einrichtung (66) zu aktivieren.

7. Vorrichtung nach einem der Ansprüche 1 bis 6, **dadurch gekennzeichnet, daß** die erste Einrichtung (18) eine optische oder digitale Belichtungsstation ist.

8. Vorrichtung nach einem der Ansprüche 1 bis 7, **dadurch gekennzeichnet, daß** die zweite Einrichtung (66) eine optische oder digitale Belichtungsstation ist.

9. Vorrichtung nach einem der Ansprüche 1 bis 8, **dadurch gekennzeichnet, daß** im Anschluß an die zweite Einrichtung (66) ein Materialspeicher (67) anschließt.

10. Vorrichtung nach Anspruch 1 bis 9, **dadurch gekennzeichnet, daß** der Materialspeicher Führungen aufweist, die der seitlichen Führung des Materialbandes im Speicher dienen, wobei diese Führungen insbesondere als seitliche Materialspeicherwände ausgebildet sind.

## Claims

1. A device for the production of photographic prints on a strip-like continuous material with the following features:
a) a device (18) for exposing or scanning original images which are processed in the form of a strip-like continuous material;
b) a first device for the generation of prints (118);
c) a second device (66) for the generation of data or graphical data fields on the strip-like strip of continuous material (108) with the prints;
d) a material storage device (58) between the first and second devices, said material storage device (58) being a chamber in which the strip of material with the prints or the print material strip (108c) is fed in through a feed inlet, stored randomly and delivered through a delivery outlet;
e) a marking device (116) provided in the area of the first device (118) to provide a mark (200, 202, 204) on or in the print material strip; and
f) a monitoring device (54, 64) to detect the mark (200, 202, 204),
**characterized in that** the monitoring device (54, 64) determines where and when the second device (66) is to be activated by counting detected marks.

2. A device in accordance with claim 1, **characterized in that** a guard device (60) such as a high voltage electrode or a ventilator, for example, is provided at the delivery outlet (62) of the material storage device (58).

3. A device in accordance with one of claims 1 or 2, **characterized in that** the feed inlet (56) and the delivery outlet (62) are positioned at the same height.

4. A device in accordance with one of claims 1 to 3, **characterized in that** the material storage device (58) has openings (63) in the walls which run vertically in relation to the plane in which the print material strip (108c) extends.

5. A device in accordance with one of claims 1 to 4, **characterized in that** the monitoring device (54, 64) is positioned at the feed inlet (56) and/or the delivery outlet (62) of the material storage device (58) to monitor the amount of stored print material strip at any given time or the number of areas of the strip of material to be exposed by the second device (66).

6. A device in accordance with one of claims 1 to 5, **characterized in that** the second device has a monitoring device (64) which detects a/the mark in order to activate the second device (66).

7. A device in accordance with one of claims 1 to 6, **characterized in that** the first device (18) is an optical or digital photostation.

8. A device in accordance with one of claims 1 to 7, **characterized in that** the second device (66) is an optical or digital photostation.

9. A device in accordance with one of claims 1 to 8, **characterized in that** a material storage device (67) is connected to the second device (66).

10. A device in accordance with claims 1 to 9, **characterized in that** the material storage device has guides which guide the strip of material laterally through the storage device, these guides taking the form in particular of lateral walls in the material storage device.

## Revendications

1. Dispositif pour réaliser des tirages photographiques sur un matériau sans fin de type bande, présentant les caractéristiques suivantes :
a) un dispositif (18) pour éclairer par transmission ou balayer des originaux qui sont traités sous la forme d'un matériau sans fin de type bande ;
b) un premier équipement pour produire les tirages (118) ;
c) un deuxième équipement (66) pour produire des zones de données ou des zones de données d'image sur la bande de matériau sans fin (108) de type bande, avec les tirages ;
d) un stockeur de matériau (58) entre le premier et le deuxième équipement, le stockeur de matériau (58) étant un compartiment dans lequel la bande de matériau avec les tirages ou la bande de matériau de tirage (108c) est déposée de manière aléatoire par une entrée et est extraite par une sortie ;
e) un dispositif de marquage (116) qui est prévu dans la zone du premier équipement (118) pour prévoir un marquage (200, 202, 204) sur la bande de matériau de tirage ; et
f) un dispositif de surveillance (54, 56) pour détecter le marquage (200, 202, 204),
**caractérisé en ce que** le dispositif de surveillance (54, 64) définit, par comptage des marquages détectés où, et respectivement quand, le deuxième équipement (66) doit être activé.

2. Dispositif selon la revendication 1, **caractérisé en ce qu'**à la sortie (62) du stockeur de matériau (58) est disposé un dispositif de rejet (60), par exemple une électrode à haute tension ou un ventilateur (60).

3. Dispositif selon l'une des revendications 1 ou 2, **caractérisé en ce que** l'entrée (56) et la sortie (62) sont disposées à une même hauteur.

4. Dispositif selon l'une des revendications 1 à 3, **caractérisé en ce que** le stockeur de matériau (58) présente des ouvertures (63) dans les parois qui s'étendent perpendiculairement au plan inférieur d'étendue de la bande de matériau de tirage (108c).

5. Dispositif selon l'une des revendications 1 à 4, **caractérisé en ce que** le dispositif de surveillance (54, 56) est disposé à l'entrée (56) et/ou à la sortie (62) du stockeur de matériau (58), afin de surveiller la quantité actuelle de bande de matériau de tirage stockée ou des zones de la bande de matériau, à insoler au moyen du deuxième équipement (66).

6. Dispositif selon l'une des revendications 1 à 5, **caractérisé en ce que** le deuxième équipement comporte un dispositif de surveillance (64) qui détecte un marquage, respectivement le marquage, afin d'activer le deuxième équipement (66).

7. Dispositif selon l'une des revendications 1 à 6, **caractérisé en ce que** le premier équipement (18) est un poste d'insolation optique ou numérique.

8. Dispositif selon l'une des revendications 1 à 7, **caractérisé en ce que** le deuxième équipement (66) est un poste d'insolation optique ou numérique.

9. Dispositif selon l'une des revendications 1 à 8, **caractérisé en ce qu'**un stockeur de matériau (67) fait suite au deuxième équipement (66).

10. Dispositif selon la revendication 1 à 9, **caractérisé en ce que** le stockeur de matériau comporte des guides qui servent au guidage latéral de la bande de matériau dans le stockeur, ces guides étant réalisés en particulier sous la forme de parois latérales du stockeur de matériau.
